# EUROPÄISCHE PATENTANMELDUNG

(11) **EP 1 681 324 A2**
(43) Veröffentlichungstag der Anmeldung: **19.07.2006**
(21) Anmeldenummer: 05025151.1
(22) Anmeldetag: 17.11.2005
(51) Int. Cl.: C09D 175/16, C08G 18/67, C08G 18/80

(54) **Dual Cure-Systeme**

(30) Priorität: 30.11.2004 DE 102004057916
(71) Anmelder: Bayer MaterialScience AG, 51368 Leverkusen (DE)
(72) Erfinder: Gürtler, Christoph, Dr., 50676 Köln (DE); Mechtel, Markus, Dr., 51467 Bergisch Gladbach (DE); Weikard, Jan, Dr., 51519 Odenthal (DE); Yuva, Nusret, 51399 Burscheid (DE)

(57) **Zusammenfassung**

Die vorliegende Erfindung betrifft Polyisocyanat-Vernetzer für Dual Cure Systeme sowie deren Herstellung und Verwendung.

## Beschreibung

Die vorliegende Erfindung betrifft neue Polyisocyanat-Vernetzer für Dual Cure Systeme sowie deren Herstellung und Verwendung.

Beschichtungsmittel, die durch zwei unabhängige Prozesse aushärten, werden allgemein als Dual Cure-Systeme bezeichnet. Üblicherweise besitzen die enthaltenen Bindemittelkomponenten dabei unterschiedliche funktionelle Gruppen die unter geeigneten Bedingungen i.d.R. unabhängig voneinander miteinander vernetzen. Übliche zum Stand der Technik gehörende Dual Cure-Systeme besitzen strahlen- sowie thermisch härtbare Gruppen, wobei besonders vorteilhafte Eigenschaften bei Verwendung von Isocyanat- und Hydroxygruppen als thermisch vemetzende Funktionen erhalten werden.

EP-A 0 928 800 beschreibt ein Dual Cure-System, das einen Vernetzer enthält, der sowohl strahlenhärtbare Acrylatgruppen als auch Isocyanatgruppen enthält, die mit geeigneten, z.B. OHgruppenhaltigen Bindemitteln thermisch ausgehärtet werden können. Da NCO- und OH-Gruppen bereits bei Raumtemperatur miteinander reagieren, kann das vorgenannte Beschichtungssystem nur als Zwei-Komponentensystem gehandhabt werden, bei dem NCO-haltige und NCO-reaktive Bestandteile kurz vor oder beim Beschichtungsvorgang miteinander vermischt werden. Der Nachteil einer nur sehr kurzen Verarbeitungszeit dieser Systeme kann durch Blockierung der freien NCO-Gruppen beseitigt werden. Die Kombination solcher strahlen- und hitzehärtbaren Systeme, die blockierte Isocyanatgruppen enthalten, ist beispielsweise in EP-A-126 359, WO-A 01/42329 oder US 4 961 960 beschrieben.

Bei den meisten zum Stand der Technik gehörenden blockierten Polyisocyanaten werden die enthaltenen Blockierungsmittel bei der Vernetzungsreaktion abgespalten und anschließend freigesetzt. Dabei ist es notwendig, dass die verwendeten Blockierungsmittel den Lack möglichst vollständig nach dem Einbrennen verlassen, um die Lackqualität nicht negativ zu beeinflussen. Die so erhältlichen Lacke sollten beim Einbrennen keine Vergilbung zeigen und lichtecht sein.

Je nach verwendetem Blockierungsmittel sind Kratzfestigkeit und Säurestabilität von Einkomponenten-(1K)-Lackfilmen in der Regel schlechter als bei Zweikomponenten-(2K)-Polyurethan Lackierungen (z.B. T. Engbert, E. König, E. Jürgens, Farbe & Lack, Curt R. Vincentz Verlag, Hannover 10/1995). Die Abspaltung des Blockierungsmittels und dessen gasförmiges Entweichen aus dem Lackfilm kann bei ungeeigneten Blockierungsmitteln darüber hinaus zur Blasenbildung im Lack führen.

Die wichtigsten Verbindungen, die zur Blockierung von Polyisocyanaten eingesetzt werden, sind ε-Caprolactam, Methyl-ethyl-ketoxim (Butanonoxim), Malonsäurediethylester, sekundäre Amine sowie Triazol- und Pyrazolderivate, so wie sie z.B. in EP-A 0 576 952, EP-A 0 566 953, EP-A 0 159 117, US-A 4 482 721, WO 97/12924 oder EP-A 0 744 423 beschrieben sind.

Für besonders niedrige Vernetzungstemperaturen im Bereich von 90 bis 120°C finden neuerdings auch Malonsäuredieethylester blockierte Isocyanate Verwendung (z.B. EP-A 0 947 531). Im Gegensatz zu Blockierungen mit z.B. N-heterocyclischen Verbindungen, wie Caprolactam, oder z.B. Butanonoxim wird hierbei nicht das vollständige Blockierungsmittel abgespalten, sondern es kommt beim Aushärten zu einer Umesterung am Malonsäurediethylester unter Abspaltung von Ethanol. Nachteilig ist allerdings, dass solche Systeme aufgrund der labilen Esterbindung anfällig gegen Säureeinwirkung sind, so dass die Anwendungsmöglichkeiten dieser Produkte eingeschränkt sind.

Mit 3,5-Dimethylpyrazol (DMP) blockierte Polyisocyanate sind sehr vielseitig einsetzbare Produkte, die sich durch eine sehr niedrige Vergilbungsneigung bei Ein- und Überbrennen auszeichnen und bereits bei niedrigen Temperaturen von < 130°C deblockieren.

Sekundäre Amine als Blockierungsmittel werden in der EP-A 0 096 210 beschrieben, wobei der Schwerpunkt offensichtlich auf sekundären Dialkylaminen liegt. Zwar werden unter anderem dort auch Aralkyl-substituierte Amine genannt, jedoch beschreibt EP-A 096 210 keine expliziten Verbindungen dieser Art. Außerdem wird noch darauf hingewiesen, dass sich nicht grundsätzlich alle sekundären Amine, sondern nur die erfindungsgemäßen aus EP-A 096 210 eignen.

In DE-A 3434881 und EP-A 0 787 754 werden feste blockierte Polyisocyanate als Härter für Pulverlacke beschrieben, wobei unter anderem Aralkyl-substituierte sekundäre Amine wie tert.-Butyl-benzylamin als Blockierungsmittel genannt sind. Solche Lacke härten bereits bei weniger als 170°C aus und zeigen auch bei Einbrennen, Überbrennen und Bewitterung keine Tendenz zur Verfärbung. Hinweise auf den Einsatz solcher Blockierungsmittel in flüssigen oder wässrigen Lacksystemen, welche üblicherweise bei deutlich niedrigeren Temperaturen von bevorzugt < 130°C hergestellt, verarbeitet und ausgehärtet werden, sind nicht genannt.

Als Blockierungsmittel für Polyisocyanate in thermischhärtenden Flüssiglackanwendungen werden solche Amine, speziell N-tert.Butyl-N-benzylamin, in EP-A 1 375 550, EP-A 1 375 551 und EP-A 1 375 552 beschrieben, wobei sich solche Systeme durch eine gegenüber Butanonoxim verbesserte Vergilbungsstabilität und niedrige Einbrenntemperaturen auszeichnen und diesbezüglich etwa mit DMP-blockierten Polyisocyanaten vergleichbare Eigenschaften aufweisen.

Für Dual-Cure-Systemen, bei denen die Aushärtung über zwei getrennt voneinander ablaufende Vemetzungsmechanismen erfolgt und bei denen in der Regel ein thermischer und ein photochemischer Härtungsprozess durchlaufen werden, eignen sich jedoch nicht alle aus der Chemie der thermischen Härtung etablierten Blockierungsmittel gleichermaßen gut zur Herstellung vergilbungsarmer Beschichtungen. Während DMP-blockierte Polyisocyanate in rein thermisch härtenden Beschichtungsmitteln hervorragende Vergilbungsstabilität beim Ein- und Überbrennen aufweisen, so weisen Beschichtungen basierend auf Dual-Cure-Polyiscyanaten, die neben den strahlenhärtenden Gruppen mit DMP blockierte NCO-Gruppen aufweisen, nach Durchlaufen des thermischen und des photochemischen Aushärtungsvorganges, ein unbefriedigend hohes Maß an Vergilbung insbesondere bei Überbrennen auf.

Aufgabe der vorliegenden Erfindung war es daher, Polyisocyanate für Dual-Cure-Systeme zur Verfügung zu stellen, die neben den strahlenhärtenden Gruppen für die photochemisch initiierte Vernetzung auch blockierte NCO-Gruppen für die thermische Aushärtung aufweisen und die Einbrenntemperatur der darauf basierten Lacksysteme unterhalb von 130°C liegt und sich ferner die so erhältlichen Beschichtungen durch besonders niedrige Vergilbung auch bei Überbrennen auszeichnen.

Es wurde nun gefunden, dass Polyisocyanate, die mit sekundären Aminen der Formel (I) blockierte NCO-Gruppen aufweisen, diese Aufgabe erfüllen, 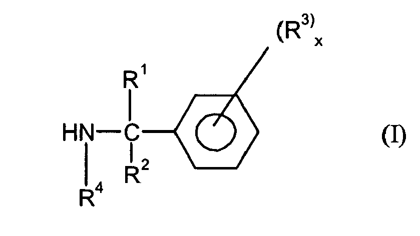 worin
- R¹, R², R³: unabhängig voneinander Wasserstoff oder ein C₁-C₄-Alkyl- oder Cycloalkylrest sind,
- R⁴: ein C₁-C₄-Alkyl, C₆-C₁₀-Cycloalkyl oder C₇-C₁₄-Aralkylrest ist und
- x: eine ganze Zahl von 1 bis 5 ist.

Gegenstand der Erfindung sind daher blockierte Polyisocyanate, die neben wenigstens einer unter Einwirkung aktinischer Strahlung mit ethylenisch ungesättigten Verbindungen unter Polymerisation reagierende Gruppe (strahlenhärtende Gruppe) auch wenigstens eine Struktureinheit der Formel (II) aufweisen, 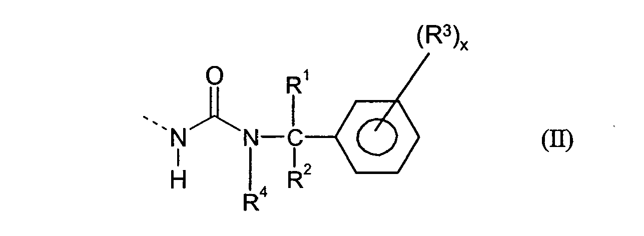 worin
- R¹, R², R³: unabhängig voneinander Wasserstoff oder ein C₁-C₄-Alkyl- oder Cycloalkylrest sind,
- R⁴: ein C₁-C₄-Alkyl, C₆-C₁₀-Cycloalkyl oder C₇-C₁₄-Aralkylrest ist und
- x: eine ganze Zahl von 1 bis 5 ist.

Unter aktinischer Strahlung wird elektromagnetische, ionisierende Strahlung verstanden, insbesondere Elektronenstrahlen, UV-Strahlen sowie sichtbares Licht (Roche Lexikon Medizin, 4.Auflage; Urban & Fischer Verlag, München 1999).

Unter Einwirkung aktinischer Strahlung mit ethylenisch ungesättigten Verbindungen unter Polymerisation reagierende Gruppen (strahlenhärtende Gruppen) werden im Rahmen der vorliegenden Erfindung Vinylether-, Maleinyl-, Fumaryl-, Maleinimid-, Dicyclopentadienyl-, Acrylamid-, Acryl- und Methacryl-Gruppen verstanden, wobei dies bevorzugt Vinylether-, Acrylat- und/oder Methacrylat-Gruppen, besonders bevorzugt Acrylatgruppen sind.

Ferner ist ein Gegenstand der Erfindung ein Verfahren zur Herstellung der erfindungsgemäßen Polyisocyanate, bei dem
A1) ein oder mehrere organische Polyisocyanate mit,
A2) einer oder mehreren Verbindungen, die mindestens eine isocyanatreaktive Gruppe aufweisen und mindestens eine unter Einwirkung aktinischer Strahlung mit ethylenisch ungesättigten Verbindungen unter Polymerisation reagierende Gruppe (strahlenhärtende Gruppe) enthalten,
A3) ggf. weiteren isocyanatreaktiven Verbindungen und
A4) Blockierungsmitteln gemäß Formel (I) 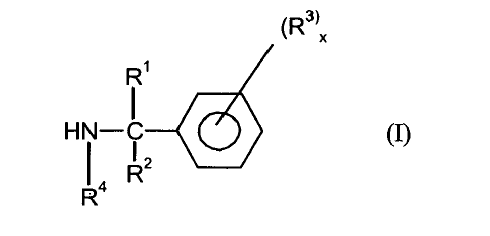 worin
   - R¹, R², R³: unabhängig voneinander Wasserstoff oder ein C₁-C₄-Alkyl- oder Cycloalkylrest sind,
   - R⁴: ein C₁-C₄-Alkyl, C₆-C₁₀-Cycloalkyl oder C₇-C₁₄-Aralkylrest ist und
   - x: eine ganze Zahl von 1 bis 5 ist,
miteinander umgesetzt werden.

Bevorzugte isocyanatreaktive Gruppen im Sinne der Erfindung sind Hydroxyl-, Amino-, Asparaginat- oder Thiolgruppen, besonders bevorzugt sind dies Hydroxylgruppen.

In Komponente A1) können alle organischen isocyanatgruppenaufweisende Verbindungen, jedoch bevorzugt aliphatische, cycloaliphatische, aromatische oder heterocyclische Polyisocyanate einer NCO-Funktionalität ≥ 2, einzeln oder in beliebigen Mischungen untereinander verwendet werden, wobei es unerheblich ist, ob diese durch Phosgenierung oder nach phosgenfreien Verfahren hergestellt wurden.

Ebenfalls gut geeignet sind die davon abgeleiteten Polyisocyanate mit Uretdion-, Carbodiimid-, Isocyanurat-, Iminooxadiazindion-, Biuret-, Urethan-, Allophanat-, Oxadiazintrion oder Acylhamstoff-Strukur sowie Polyisocyanatprepolymere einer mittleren NCO-Funktionalität > 1, wie sie werden durch Vorreaktion eines molaren Überschusses eines der obengenannten Polyisocyanate, mit einem organischen Material erhalten werden, das mindestens zwei isocyanatreaktive Wasserstoffatome pro Molekül, z.B. in Form von OH-Gruppen, aufweist.

Beispiele für einfache aliphatische und cycloaliphatische Isocyanate, die in A1) enthalten sind oder auf denen die höhermolekularen Polyisocyanate bzw. -Prepolymere der Komponente A1) basieren können, sind 1,4-Diisocyanatobutan, 1,5-Diisocyanatopentan, 1,6-Diisocyanatohexan (HDI), 2-Methyl-1,5-diisocyanatopentan, 1,5-Diisocyanato-2,2-dimethylpentan, 2,2,4- bzw. 2,4,4-Trimethyl-1,6-diisocyanatohexan, 1,10-Diisocyanatodecan, 1,3- und 1,4-Diisocyanatocyclohexan, 1,3- und 1,4-Bis-(isocyanatomethyl)-cyclohexan, 1-Isocyanato-3,3,5-trimethyl-5-isocyanatomethylcyclohexan (Isophorondiisocyanat, IPDI), 4,4'-Diisocyanatodicyclohexylmethan (Desmodur® W, Bayer AG, Leverkusen), 4-Isocyanatomethyl-1,8-octandiisocyanat (Triisocyanatononan, TIN), ω,ω'-Diisocyanato-1,3-dimethylcyclohexan (H₆XDI), 1-Isocyanato-1-methyl-3-isocyanato-methylcyclohexan, 1-Isocyanato-1-methyl-4-isocyanato-methylcyclohexan und Bis-(isocyanatomethyl)-norboman.

Beispiele für solche einfachen aromatischen Isocyanate sind 1,5-Naphthalendiisocyanat, 1,3- und 1,4-Bis-(2-isocyanato-prop-2-yl)-benzol (TMXDI), 2,4- und 2,6-Diisocyanatotoluol (TDI) insbesondere das 2,4 und das 2,6-Isomere und technische Gemische der beiden Isomeren, 2,4'- und 4,4'-Diisocyanatodiphenylmethan (MDI), 1,5-Diisocyanatonaphthalin und 1,3-Bis(isocyanato-methyl)-benzol (XDI).

Im Sinne der Erfindung werden in A1) bevorzugt Verbindungen der vorstehend genannten Art mit einem Molekulargewicht von 140 bis 1000 g/mol mit aliphatisch, cycloaliphatisch, araliphatisch und/oder aromatisch gebundenen Isocyanatgruppen eingesetzt.

Besonders bevorzugt werden in Komponente A1) Polyisocyanate oder Polyisocyanatgemische der genannten Art mit ausschließlich aliphatisch und/oder cycloaliphatisch gebundenen Isocyanatgruppen eingesetzt, insbesondere solche auf Basis von Hexamethylendiisocyanat (HDI), Isophorondiisocyanat (IPDI) und/oder 4,4'-Diisocyanatodicyclohexylmethan.

In Komponente A2) können alle Verbindungen einzeln oder in beliebigen Mischungen verwendet werden, die mindestens eine gegenüber Isocyanaten reaktive Gruppe und mindestens eine strahlenhärtende Funktion der hierin definierten Art aufweisen. Bevorzugt sind dies hydroxyfunktionelle Acrylate und Methacrylate.

Als hydroxyfunktionelle Acrylate oder Methacrylate kommen Verbindungen wie 2-Hydroxyethyl(meth)acrylat, Polyethylenoxid-mono(meth)acrylate, Polypropylenoxidmono(meth)acrylate, Polyalkylenoxidmono(meth)acrylate, Poly(ε-caprolacton)mono(meth)acrylate, wie z.B. Tone® M100 (Union Carbide, USA), 2-Hydroxypropyl(meth)acrylat, 4-Hydroxybutyl(meth)acrylat, 3-Hydroxy-2,2-dimethylpropyl(meth)acrylat, die hydroxyfunktionellen Mono-, Di- oder Tetraacrylate mehrwertiger Alkohole wie Trimethylolpropan, Glycerin, Pentaerythrit, Dipentaerythrit, ethoxiliertes, propoxiliertes oder alkoxyliertes Trimethylolpropan, Glycerin, Pentaerythrit, Dipentaerythrit oder deren technische Gemische in Betracht. Geeignet sind ferner auch Alkohole, die sich aus der Umsetzung von doppelbindungshaltigen Säuren mit gegebenenfalls doppelbindungshaltigen, monomeren Epoxidverbindungen erhalten lassen, so zum z.B. die Umsetzungsprodukte von (Meth)acrylsäure mit Glycidyl(meth)acrylat oder dem Glycidylester der Versaticsäure (Cardura E10, Resolution Nederland BV, Teil der Shell BV, NL).

In Komponente A3) können beispielsweise hydrophilierend wirkende Verbindungen mit mindestens einer isocyanatreaktiven Gruppe einzeln oder als Mischung eingesetzt werden. Hydrophilierend wirkende Verbindungen werden insbesondere dann eingesetzt, wenn das erfindungsgemäße Polyisocyanat in Wasser oder wasserhaltigen Mischungen gelöst oder dispergiert werden soll.

Unter hydrophilierend wirkenden Verbindungen werden alle ionischen und nicht ionischen hydrophilen Verbindungen mit mindestens einer gegenüber Isocyanaten reaktiven Gruppe verstanden. Diese Verbindungen weisen als isocyanatreaktive Gruppen bevorzugt Hydroxy- und/oder Aminofunktionen auf.

Als hydrophile ionische Verbindungen der Komponente A3) werden bevorzugt Verbindungen eingesetzt, die mindestens eine isocyanatreaktive Gruppe sowie mindestens eine Funktionalität, wie z.B. -COOY, -SO₃Y, -PO(OY)₂ (Y = H, NH₄⁺, Metallkation), -NR₂, -NR₃⁺, -PR₃⁺ (R = H, Alkyl, Aryl), aufweisen, die bei Wechselwirkung mit wässrigen Medien ein ggf. pH-Wertabhängiges Dissoziationsgleichgewicht eingeht und auf diese Weise negativ, positiv oder neutral geladen sein kann.

Geeignete hydrophile ionische Verbindungen sind z.B. Mono- und Dihydroxycarbonsäuren, Mono- und Diaminocarbonsäuren, Mono- und Dihydroxysulfonsäuren, Mono- und Diaminosulfonsäuren sowie Mono- und Dihydroxyphosphonsäuren oder Mono- und Diaminophosphonsäuren und ihre Salze wie Dimethylolpropionsäure, Dimethylolbuttersäure, Hydroxypivalinsäure (HPS), N-(2-Aminoethyl)-β-alanin, 2-(2-Amino-ethylamino)-ethansulfonsäure, Ethylendiamin-propyl- oder -butylsulfonsäure, 1,2- oder 1,3-Propylendiamin-β-ethylsulfonsäure, Äpfelsäure, Zitronensäure, Glykolsäure, Milchsäure, Glycin, Alanin, Taurin, N-Cyclohexyl-3-aminopropiosulfonsäure (CAPS), Lysin, 3,5-Diaminobenzoesäure, ein Additionsprodukt von IPDI und Acrylsäure (EP-A 0 916 647, Beispiel 1) und dessen Alkali- und/oder Ammoniumsalze; das Addukt von Natriumbisulfit an Buten-2-diol-1,4, Polyethersulfonat, das propoxylierte Addukt aus 2-Butendiol und NaHSO₃, z.B. beschrieben in der DE-A 2 446 440 (Seite 5-9, Formel I-III) sowie in kationische Gruppen überführbare Bausteine wie N-Methyl-diethanolamin als hydrophile Aufbaukomponenten. Bevorzugte ionische oder potentiell ionische Verbindungen sind solche, die über Carboxy- oder Carboxylat- und/oder Sulfonatgruppen und/oder Ammoniumgruppen verfügen. Besonders bevorzugte ionische Verbindungen sind solche, die Carboxyl- und/oder Sulfonatgruppen als ionische oder potentiell ionische Gruppen enthalten, insbesondere die Salze von HPS, CAPS, N-(2-Aminoethyl)-β-alanin, der 2-(2-Amino-ethylamino-)ethansulfonsäure oder des Additionsproduktes von IPDI und Acrylsäure (EP-A 0 916 647, Beispiel 1) sowie der Dimethylolpropionsäure.

Als hydrophile nichtionische Verbindungen können Verbindungen mit Polyetherstruktur, bevorzugt alkylenoxidbasierende Polyether eingesetzt werden, die mindestens eine Hydroxy- oder Aminogruppe als isocyanatreaktive Gruppe enthalten.

Diese Verbindungen mit Polyetherstruktur können beispielsweise einwertige, im statistischen Mittel 5 bis 70, bevorzugt 7 bis 55 Ethylenoxideinheiten pro Molekül aufweisende Polyalkylenoxidpolyetheralkohole mit mindestens 30 mol-% Ethylenoxid sein, wie sie in an sich bekannter Weise durch Alkoxylierung geeigneter Startermoleküle zugänglich sind (z.B. in Ullmanns Encyclopädie der technischen Chemie, 4.Auflage, Band 19, Verlag Chemie, Weinheim S. 31-38).

Geeignete Startermoleküle sind beispielsweise gesättigte Monoalkohole wie Methanol, Ethanol, n-Propanol, Isopropanol, n-Butanol, Isobutanol, sec-Butanol, die isomeren Pentanole, Hexanole, Octanole und Nonanole, n-Decanol, n-Dodecanol, n-Tetradecanol, n-Hexadecanol, n-Octadecanol, Cyclohexanol, die isomeren Methylcyclohexanole oder Hydroxymethylcyclohexan, 3-Ethyl-3-hydroxymethyloxetan oder Tetrahydrofurfurylalkohol, Diethylenglykol-monoalkylether wie beispielsweise Diethylenglykolmonobutylether, ungesättigte Alkohole wie Allylalkohol, 1,1-Dimethylallylalkohol oder Oleinalkohol, aromatische Alkohole wie Phenol, die isomeren Kresole oder Methoxyphenole, araliphatische Alkohole wie Benzylalkohol, Anisalkohol oder Zimtalkohol, sekundäre Monoamine wie Dimethylamin, Diethylamin, Dipropylamin, Diisopropylamin, Dibutylamin, Bis-(2-ethylhexyl)-amin, N-Methyl- und N-Ethylcyclohexylamin oder Dicyclohexylamin sowie heterocyclische sekundäre Amine wie Morpholin, Pyrrolidin, Piperidin oder 1H-Pyrazol. Bevorzugte Startermoleküle sind gesättigte Monoalkohole. Besonders bevorzugt wird Diethylenglykolmonobutylether als Startermolekül verwendet.

Für die Alkoxylierungsreaktion geeignete Alkylenoxide sind insbesondere Ethylenoxid und Propylenoxid, die in beliebiger Reihenfolge getrennt voneinander oder im Gemisch bei der Alkoxylierungsreaktion eingesetzt werden können, so dass Block- oder Mischpolyether erhalten werden.

Bevorzugt handelt es sich bei den Verbindungen mit Polyetherstruktur um reine Polyethylenoxidpolyether oder gemischte Polyalkylenoxidpolyether, deren Alkylenoxideinheiten zu mindestens 30 mol-%, bevorzugt zu mindestens 40 mol-% aus Ethylenoxideinheiten bestehen.

Ganz besonders bevorzugt sind monofunktionelle gemischte Polyalkylenoxidpolyether, die mindestens 40 mol-% Ethylenoxid- und maximal 60 mol-% Propylenoxideinheiten aufweisen.

Desweiteren können als Verbindungen der Komponente A3) niedermolekulare Mono-, Di- oder Polyole wie kurzkettige, d.h. 2 bis 20 Kohlenstoffatome enthaltende, aliphatische, araliphatische oder cycloaliphatische Monoalkohole, Diole oder Triole eingesetzt werden. Beispiele für Monoalkohole sind Methanol, Ethanol, die isomeren Propanole, Butanole, Pentanole, weiterhin Diacetonalkohol, Fettalkohole oder fluorierte Alkohole wie sie z.B. unter dem Namen Zonyl® von der Firma DuPont erhältlich sind. Beispiele für Diole sind Ethylenglykol, Diethylenglykol, Triethylenglykol, Tetraethylenglykol, Dipropylenglykol, Tripropylenglykol, 1,2-Propandiol, 1,3-Propandiol, 1,4-Butandiol, Neopentylglykol, 2-Ethyl-2-butylpropandiol, Trimethylpentandiol, stellungsisomere Diethyloctandiole, 1,3-Butylenglykol, Cyclohexandiol, 1,4-Cyclohexandimethanol, 1,6-Hexandiol, 1,2- und 1,4-Cyclohexandiol, hydriertes Bisphenol A (2,2-Bis(4-hydroxycyclohexyl)propan), 2,2-Dimethyl-3-hydroxypropionsäure-(2,2-dimethyl-3-hydroxypropylester). Beispiele geeigneter Triole sind Trimethylolethan, Trimethylolpropan oder Glycerin. Bevorzugt sind die Alkohole 1,4-Butandiol, 1,4-Cyclohexandimethanol, 1,6-Hexandiol und Trimethylolpropan.

Wenn überhaupt werden genannte Mono-, Di- oder Triole bevorzugt nur in Mengen < 0,3, insbesondere < 0, 1 Equivalente pro Equivalent Isocyanat verwendet. Besonders bevorzugt wird auf die Verwendung dieser Mono-, Di- oder Triole verzichtet.

Als Blockierungsmittel in Komponente A4) werden bevorzugt Verbindungen der Formel (I) eingesetzt, wobei
- R¹, R², R³: Wasserstoff,
- R⁴: eine Methyl-, Ethyl-, Isopropyl- oder tert.-Butylgruppe, bevorzugt eine tert.-Butylgruppe ist und
- x: eine ganze Zahl von 1 bis 5 ist.

Beispiele solcher Blockierungsmittel sind N-tert. Butyl-N-benzylamin, das N-Isopropyl-N-benzylamin, das N-Ethyl-N-benzylamin, das N-Methyl-N-benzylamin, das N-Isopropyl-N-(dimethyl)benzylamin.

Selbstverständlich können als Komponenten A4) die genannten Amine sowohl in Mischungen untereinander als auch in beliebigen Mischungen mit anderen Blockierungsmitteln eingesetzt werden. Geeignete weitere Blockierungsmittel sind beispielsweise Alkohole, Lactame, Oxime, Malonester, Alkylacetoacetate, Triazole, Phenole, Imidazole, Pyrazole sowie Amine, wie z.B. Butanonoxim, Diisopropylamin, 1,2,4-Triazol, Dimethyl-1,2,4-triazol, Imidazol, Malonsäurediethylester, Acetessigester, Acetonoxim, 3,5-Dimethylpyrazol, ε-Caprolactam, N-Methyl-, N-Ethyl-, N-(Iso)propyl-, N-n-Butyl-, N-iso-Butyl- oder 1,1-Dimethylbenzylamin, N-Alkyl-N-1,1-Dimethyl-methylphenylamin, Addukte von Benzylamin an Verbindungen mit aktivierten Doppelbindungen wie Malonsäureestern, N,N-Dimethylaminopropylbenzylamin und andere tertiäre Aminogruppen enthaltende gegebenenfalls substituierte Benzylamine und/oder Dibenzylamin oder beliebige Gemische dieser Blockierungsmittel. Falls überhaupt mitverwendet beträgt der Anteil dieser weiteren von N-tert. Butyl-N-benzylamin verschiedenen Blockierungsmittel der Komponente A4) bis zu 80 Gew.-%, bevorzugt bis zu 60 Gew.-%, ganz besonders bevorzugt bis zu 20 Gew.-% der gesamten Komponente A4).

Ganz besonders bevorzugt wird ausschließlich N-tert. Butyl-N-benzylamin als Blockierungsmittel in Komponente A4).

Das Verhältnis von freien zu blockierenden Isocyanatgruppen zu dem Blockierungsmittel aus A4) beträgt 1 : 0,8 bis 1 : 1,2 mol, bevorzugt 1 zu 1.

Bevorzugt werden pro Equivalent NCO in A1) 0,2 bis 0,8 Equivalente A4), insbesondere 0,3 bis 0,7 Equivalente A4), eingesetzt. Bevorzugt werden pro Equivalent NCO in A1) 0,2 bis 0,8 Equivalente A2), insbesondere 0,3 bis 0,7 Equivalente A2), eingesetzt.

Der Gehalt freier NCO-Gruppen in den erfindungsgemäßen Polyisocyanaten ist < 5 Gew.-%, bevorzugt < 0,5 Gew.-%, insbesondere < 0,1 Gew.-%.

Neben den Komponente A1) bis A4) können auch alle dem Fachmann für die Katalyse der NCO-Blockierung bekannten Verbindungen einzeln oder in beliebigen Mischungen verwendet werden. Bevorzugt sind katalytisch aktive Lewissäuren oder katalytisch aktive Amine, wie sie in der Polyurethanchemie gängigerweise verwendet werden. Besonders bevorzugte Katalysatoren für die Blockierungsreaktion sind organische Zinn- und anorganische Wismutkatalysatoren wie z.B. Wismut-ethylhexanoat oder Dibutylzinndilaurat, DBTL sowie Zinkkatalysatoren.

Die Katalysatormenge beträgt typischerweise 0,05 bis 10 Gew.-%, bevorzugt 0,1 bis 3 Gew.-%, insbesondere 0,2 bis 1 Gew.-%, bezogen auf den nichtflüchtigen Anteil des herzustellenden Polyisocyanats.

Ferner können auch die dem Fachmann aus der Polyurethanchemie und der Chemie ethylenisch ungesättigter Beschichtungsstoffe an sich bekannten Hilfs- und Zusatzstoffe oder deren Gemische mitverwendet werden. Bevorzugt ist die Verwendung von Stabilisatoren zur Vermeidung vorzeitiger Polymerisation in einer Menge von 0,01 bis 1 Gew.-%, bevorzugt 0,1 bis 0,5 Gew. -% bezogen auf die Menge der ungesättigten Gruppen. Solche Inhibitoren sind beispielsweise in Houben-Weyl, Methoden der organischen Chemie, 4. Auflage, Band XIV/1, Georg Thieme Verlag, Stuttgart 1961, Seite 433 ff. beschrieben. Als Beispiele seien genannt: Natriumdithionit, Natriumhydrogensulfid, Schwefel, Hydrazin, Phenylhydrazin, Hydrazobenzol, N-Phenyl-β-naphthylamin, N-Phenyl-ethanoldiamin, Dinitrobenzol, Picrinsäure, p-Nitroso-dimethylanilin, Diphenylnitrosamin, Phenole, wie para-Methoxyphenol, 2,5-Di-tert.-Butylhydrochinon, 2,6-Di-tert.-butyl-4-methylphenol, p-tert-Butyl-brenzcatechin oder 2,5-Di-tert.-amyl-hydrochinon, Tetramethyl-thiuramdisulfid, 2-Mercaptobenzthiazol, Dimethyl-dithiocarbaminsäure-natriumsalz, Phenothiazin, N-Oxyl-Verbindungen wie z.B. 2,2,6,6-Tetramethylpiperidin-N-Oxid (TEMPO) oder eines seiner Derivate. Ebenso können die Stabilisatoren auch chemisch eingebaut werden, dabei eignen sich Verbindungen der oben genannten Klassen insbesondere, wenn sie noch weitere freie aliphatische Alkoholgruppen oder primäre oder sekundäre Amingruppen tragen und damit dann über Urethan- oder Harnstoff-Gruppen chemisch gebunden Stabilisatoren darstellen. Hierfür besonders geeignet sind 2,2,6,6-Tetramethyl-4-hydroxy-piperidin-N-oxid. Weiterhin wird in einer bevorzugten Variante ein trockenes, sauerstoffhaltiges Gas, vorzugsweise Luft, während der Herstellung der erfindungsgemäßen Polyisocyanate eingeleitet.

Die Herstellung der erfindungsgemäßen Polyisocyanate kann in Substanz oder aber in Gegenwart geeigneter Lösungsmittel oder Reaktivverdünner erfolgen. Geeignete Lösungsmittel sind die üblichen Lacklösungsmittel, wie z.B. Butylacetat, Methoxypropylacetat, Aceton, Methylethylketon, N-Methylpyrrolidon oder Solventnaphtha der Fa. Exxon-Chemie als aromatenhaltiges Lösungsmittel sowie Gemische der genannten Lösungsmittel. Bevorzugt wird die Blockierung in den genannten Lösungsmitteln vorgenommen, wobei der einzustellende Festkörpergehalt zwischen 10 und 90 % beträgt.

Geeignete Reaktivverdünner sind beispielsweise die in der Technologie der Strahlenhärtung bekannten Verbindungen (vgl. Römpp Lexikon Chemie, S.491, 10. Aufl. 1998, Georg-Thieme-Verlag, Stuttgart), insbesondere solche mit geringen Hydroxylgehalten unter 30, bevorzugt unter 10 mg KOH/g. Beispielhaft seien die Ester der Acrylsäure oder Methacrylsäure erwähnt, bevorzugt der Acrylsäure, der folgenden Alkohole. Einwertige Alkohole sind die isomeren Butanole, Pentanole, Hexanole, Heptanole, Octanole, Nonanole und Decanole, weiterhin cycloaliphatische Alkohole wie Isobornol, Cyclohexanol und alkylierte Cyclohexanole, Dicyclopentanol, arylaliphatische Alkohole wie Phenoxyethanol und Nonylphenylethanol, sowie Tetrahydrofurfurylalkohole. Weiterhin können alkoxylierte Derivate dieser Alkohole verwendet werden. Zweiwertige Alkohole sind beispielsweise Alkohole wie Ethylenglykol, Propandiol-1,2, Propandiol-1,3, Diethylenglykol, Dipropylenglykol, die isomeren Butandiole, Neopentylglykol, Hexandiol-1,6, 2-Ethylhexandiol und Tripropylenglykol oder auch alkoxylierte Derivate dieser Alkohole. Bevorzugte zweiwertige Alkohole sind Hexandiol-1,6, Dipropylenglykol und Tripropylenglykol. Höherwertige Alkohole sind Glycerin, Trimethylolpropan, Ditrimethylolpropan, Pentaerythrit oder Dipentaerythrit oder deren alkoxylierte Derivate.

Die Herstellung der erfindungsgemäßen Polyisocyanate wird bevorzugt in einem Temperaturbereich von 25 bis 180°C, besonders bevorzugt in einem Bereich von 30 bis 90°C durchgeführt.

In einer bevorzugten Ausführungsform der Erfindung wird so vorgegangen, dass Komponente A1) vorgelegt wird und bei Temperaturen von 30 bis 150°C mit A2), ggf. A3) und ggf. A4) umgesetzt wird, bis der NCO-Gehalt auf den gewünschten Wert gefallen ist. Die Komponenten A2) bis A4) können dabei einzeln in beliebiger Reihenfolge oder als Mischung zugegeben werden. Bevorzugt ist die Zugabe als Mischung. Bevorzugt wird während der Umsetzung der genannten Komponenten ein trockenes, sauerstoffhaltiges Gases, bevorzugt Luft, durch das Reaktionsmedium geleitet.

Möglich ist auch A2), A3) und A4) vorzulegen und A1) zuzudosieren. Auch erst A2), A3), A4) oder eine Mischung von zwei dieser Komponenten vorzulegen, dann A1) zuzudosieren und schließlich die noch fehlenden Bestandteile A2), A3) und/oder A4) zuzugeben, ist möglich.

Die gegebenenfalls mitzuverwendenden Hilfs- und Zusatzstoffe können zu Beginn, während oder nach der Zugabe von A2), A3) oder A4) zugegeben werden. Bevorzugt werden diese unmittelbar nach A4) zugegeben werden. Falls vorhanden, werden Lösemittel oder Reaktivverdünner, insbesondere wenn Stabilisatoren enthalten sind, zumindest teilweise vor Zugabe von A2) zugegeben. Lösemittel werden bevorzugt vor oder nach Ende der Umsetzung zugegeben. Insbesondere wenn das Lösungsmittel mit Isocyanaten reagiert, ist es zweckmäßig das Lösungsmittel erst zuzugeben, wenn die Reaktion beendet oder der NCO-Gehalt unter 1 Gew.% gefallen ist.

Sollen die erfindungsgemäßen Polyisocyanate Bestandteil eines bei Applikation festen Beschichtungsmittels, z.B. eines Pulverlacks, sein, so sollten die erfindungsgemäßen Polyisocyanate entweder amorph mit einer Glasübergangstemperatur von 20 bis 90 °C, insbesondere 30 bis 65 °C, oder kristallin mit einem Schmelzpunkt von 30 bis 130 °C, insbesondere von 60 bis 120 °C bevorzugt sein. Derartige Polyisocyanate werden z.B. durch den Einsatz von Verbindungen mit cycloaliphatischen Struktureinheiten bei der Herstellung der erfindungsgemäßen Polyisocynate erhalten. Bevorzugt werden hierfür cycloaliphatische Diisocyanate in Komponente A1) eingesetzt.

Die auf den erfindungsgemäßen Polyisocyanaten basierenden Dual-Cure-Systeme eignen sich zur Herstellung von Beschichtungen, Verklebungen und Dichtstoffen.

Ein weiterer Gegenstand der Erfindung sind daher härtbare Dual-Cure-Zusammensetzungen, mindestens enthaltend die erfindungsgemäßen Polyisocyanate.

Ebenfalls ein Gegenstand der Erfindung sind Dual-Cure-Zusammensetzungen, die neben Polyisocyanaten, die mit mit den unter A4) genannten Blockierungsmitteln blockierte NCO-Gruppen, selbst jedoch keine strahlenhärtenden Gruppen aufweisen, auch solche blockierten Polyisocyanate enthalten, die wenigstens einer strahlenhärtenden Gruppe aufweisen, jedoch keine mit den unter A4) genannten Blockierungsmitteln blockierte NCO-Gruppen enthalten.

In den vorstehend genannten erfindungsgemäßen Dual-Cure-Zusammensetzungen können daneben noch blockierte Polyisocyanate enthalten sein, die selbst keine strahlenhärtenden Gruppen aufweisen. Diese basieren auf den bereits vorstehend bei Komponente A1) genannten Isocyanaten und sind mit den im Zusammenhang mit A4) genannten Blockierungsmitteln blockiert. Die Herstellung solcher Polyisocyanate ist dem Fachmann an sich bekannt und bedarf an dieser Stelle keiner weiteren Erläuterung.

In den vorstehend genannten erfindungsgemäßen Dual-Cure-Zusammensetzungen können darüber hinaus noch ein oder mehrere Verbindungen enthalten sein, die mindestens eine isocyanatreaktive Gruppe aufweisen und ggf. eine oder mehrere funktionelle Gruppen enthalten, die unter Einwirkung aktinischer Strahlung mit ethylenisch ungesättigten Verbindungen unter Polymerisation reagieren.

Diese Verbindungen können monomer, oligomer oder polymer sein und enthalten mindestens eine, bevorzugt zwei oder mehr mit Isocyanaten reaktive Gruppen.

Solche Verbindungen sind beispielsweise niedermolekulare kurzkettige, d.h. 2 bis 20 Kohlenstoffatome enthaltende aliphatische, araliphatische oder cycloaliphatische Diole oder Triole. Beispiele für Diole sind Ethylenglykol, Diethylenglykol, Triethylenglykol, Tetraethylenglykol, Dipropylenglykol, Tripropylenglykol, 1,2-Propandiol, 1,3-Propandiol, 1,4-Butandiol, Neopentylglykol, 2-Ethyl-2-butylpropandiol, Trimethylpentandiol, stellungsisomere Diethyloctandiole, 1,3-Butylenglykol, Cyclohexandiol, 1,4-Cyclohexandimethanol, 1,6-Hexandiol, 1,2- und 1,4-Cyclohexandiol, hydriertes Bisphenol A (2,2-Bis(4-hydroxycyclohexyl)propan), 2,2-Dimethyl-3-hydroxypropionsäure-(2,2-dimethyl-3-hydroxypropylester). Beispiele geeigneter Triole sind Trimethylolethan, Trimethylolpropan oder Glycerin. Geeignete höherfunktionelle Alkohole sind Ditrimethylolpropan, Pentaerythrit, Dipentaerythrit oder Sorbit.

Geeignet sind auch höhermolekulare Polyole wie Polyesterpolyole, Polyetherpolyole, hydroxyfunktionelle Acrylharze, hydroxyfunktionelle Polyurethane oder entsprechende Hybride (vgl. Römpp Lexikon Chemie, S.465-466, 10. Aufl. 1998, Georg-Thieme-Verlag, Stuttgart).

Ebenfalls geeignet sind die bereits unter A2) zusammengefassten Verbindungen und darüberhinaus isocyanatreaktive oligomere oder polymere ungesättigte Acrylat- und/oder Methacrylatgruppen enthaltende Verbindungen alleine oder in Kombination mit den vorgenannten monomeren Verbindungen. Bevorzugt werden dabei hydroxylgruppenhaltige Polyesteracrylate mit einem OH-Gehalt von 30 bis 300 mg KOH/g, bevorzugt 60 bis 200, besonders bevorzugt 70 bis 120 eingesetzt.

Die Herstellung von Polyesteracrylaten wird in der DE-A 4 040 290 (S.3, Z. 25 - S.6, Z. 24), DE-A-3 316 592 (S. 5, Z. 14 - S. 11, Z. 30) und P. K. T. Oldring (Ed.), Chemistry & Technology of UV & EB Formulations For Coatings, Inks & Paints, Vol. 2, 1991, SITA Technology, London, S. 123 - 135 beschrieben.

Ebenfalls können die an sich bekannten hydroxylgruppenhaltigen Epoxy(meth)acrylate mit OH-Gehalten von 20 bis 300 mg KOH/g, bevorzugt von 100 bis 280 mg KOH/g, besonders bevorzugt von 150 bis 250 mg KOH/g oder hydroxylgruppenhaltige Polyurethan(meth)acrylate mit OH-Gehalten von 20 bis 300 mg KOH/g, bevorzugt von 40 bis 150 mg KOH/g, besonders bevorzugt von 50 bis 100 mg KOH/g sowie deren Mischungen untereinander und Mischungen mit hydroxylgruppenhaltigen ungesättigten Polyestern sowie Mischungen mit Polyester(meth)acrylaten oder Mischungen hydroxylgruppenhaltiger ungesättigter Polyester mit Polyester(meth)acrylaten verwendet werden. Solche Verbindungen werden ebenfalls in P. K. T. Oldring (Ed.), Chemistry & Technology of UV & EB Formulations For Coatings, Inks & Paints, Vol. 2, 1991, SITA Technology, London S. 37 - 56 beschrieben. Hydroxylgruppenhaltige Epoxy(meth)acrylate basieren insbesondere auf Umsetzungsprodukten von Acrylsäure und/oder Methacrylsäure mit Epoxiden (Glycidylverbindungen) von monomeren, oligomeren oder polymeren Bisphenol-A, hydriertem Bisphenol-A, Bisphenol-F, Hexandiol und/oder Butandiol oder deren ethoxilierten und/oder propoxilierten Derivaten.

Ferner können in den erfindungsgemäßen härtbaren Zusammensetzungen Verbindungen enthalten sein, die funktionelle Gruppen tragen, die durch Einwirkung aktinischer Strahlung mit ethylenisch ungesättigten Verbindungen unter Polymerisation reagieren und die weder NCO-Gruppen noch NCO-reaktive Gruppen aufweisen. Diese können in Mengen von bis zu 75 Gew.%, bevorzugt unter 50 Gew.% bezogen auf die härtbare Zusammensetzung eingesetzt werden. Bevorzugt wird jedoch auf solche Verbindungen verzichet.

Solche Verbindungen sind beispielsweise Polymere wie Polyacrylate, Polyurethane, Polysiloxane, sowie Verbindungen, die durch Einwirkung aktinischer Strahlung mit ethylenisch ungesättigten Verbindungen unter Polymerisation reagieren. Beispiele solcher Verbindungen beinhalten die in der Technologie der Strahlenhärtung bekannten Reaktivverdünner (vgl. Römpp Lexikon Chemie, S.491, 10. Aufl. 1998, Georg-Thieme-Verlag, Stuttgart) oder die in der Technologie der Strahlenhärtung bekannten Bindemittel wie Polyetheracrylate, Polyesteracrylate, Urethanacrylate, Epoxyacrylate, soweit diese einen Gehalt von Hydroxylgruppen unter 30, bevorzugt unter 20, besonders bevorzugt unter 10 mg KOH/g aufweisen.

Beispielhaft seien die Ester der Acrylsäure oder Methacrylsäure als Bestandteil von B4) genannt, bevorzugt der Acrylsäure, der folgenden Alkohole. Einwertige Alkohole sind die isomeren Butanole, Pentanole, Hexanole, Heptanole, Octanole, Nonanole und Decanole, weiterhin cycloaliphatische Alkohole wie Isobornol, Cyclohexanol und alkylierte Cyclohexanole, Dicyclopentanol, arylaliphatische Alkohole wie Phenoxyethanol und Nonylphenylethanol, sowie Tetrahydrofurfurylalkohole. Weiterhin können alkoxylierte Derivate dieser Alkohole verwendet werden. Zweiwertige Alkohole sind beispielsweise Alkohole wie Ethylenglykol, Propandiol-1,2, Propandiol-1,3, Diethylenglykol, Dipropylenglykol, die isomeren Butandiole, Neopentylglykol, Hexandiol-1,6, 2-Ethylhexandiol und Tripropylenglykol oder auch alkoxylierte Derivate dieser Alkohole. Bevorzugte zweiwertige Alkohole sind Hexandiol-1,6, Dipropylenglykol und Tripropylenglykol. Höherwertige Alkohole sind Glycerin, Trimethylolpropan, Ditrimethylolpropan, Pentaerythrit oder Dipentaerythrit oder deren alkoxylierte Derivate.

Ferner können die dem Fachmann für die Katalyse der NCO-Blockierung bekannten Verbindungen in den erfindungsgemäßen härtbaren Zusammensetzungen enthalten sein Bevorzugt sind dies katalytisch aktive Lewissäuren oder katalytisch aktive Amine, wie sie in der Polyurethanchemie gängigerweise verwendet werden. Besonders bevorzugt sind organische Zinn- und anorganische Wismutkatalysatoren wie z.B. Wismut-ethylhexanoat oder Dibutylzinndilaurat, DBTL sowie Zinkkatalysatoren.

Die Menge des Katalysators kann durch den Fachmann den Erfordernissen der Aushärtung angepasst werden, wobei Aushärtetemperatur zu berücksichtigen sind. Geeignete Mengen sind z.B. 0,01 bis 2 Gew.%, bevorzugt ist die Verwendung von 0,05 bis 1 Gew.%, besonders bevorzugt ist 0,07 bis 0,6 Gew.% Katalysator auf gesamt Festkörpergehalt. Sollte bei höheren Einbrenntemperaturen, d.h. ab ca. 160°C gearbeitet werden, kann auf den Katalysator gegebenenfalls auch verzichtet werden.

Darüber hinaus können die in der Technologie der Lacke, Farben, Druckfarben, Dichtstoffe und Klebstoffe üblichen Zusätze oder Hilfsmittel enthalten sein. Dazu gehören auch durch aktinische Strahlung aktivierbare Initiatoren, die eine radikalische Polymerisation der entsprechenden polymerisierbaren Gruppen auslösen. Fotoinitiatoren, die durch UV- oder sichtbares Licht aktiviert werden, sind hierbei bevorzugt. Fotoinitiatoren sind an sich bekannte, kommerziell vertriebene Verbindungen, wobei zwischen unimolekularen (Typ I) und bimolekularen (Typ II) Initiatoren unterschieden wird. Geeignete (Typ I)-Systeme sind wie aromatische Ketonverbindungen, z.B. Benzophenone in Kombination mit tertiären Aminen, Alkylbenzophenone, 4,4'-Bis(dimethylamino)benzophenon (Michlers Keton), Anthron und halogenierte Benzophenone oder Mischungen der genannten Typen. Weiter geeignet sind (Typ II)-Initiatoren wie Benzoin und seine Derivate, Benzilketale, Acylphosphinoxide z.B. 2,4,6-Trimethyl-benzoyl-diphenylphosphinoxid, Bisacylphosphinoxide, Phenylglyoxylsäureester, Campherchinon, α-Aminoalkylphenone, α,α-Dialkoxyacetophenone und α-Hydroxyalkylphenone. Soll das erfindungsgemäße Beschichtungsmittel wässrig verarbeitet werden, so finden bevorzugt Fotoinitiatoren Verwendung, die leicht in wässrige Beschichtungsmittel einarbeitbar sind. Solche Produkte sind beispielsweise Irgacure® 500, Irgacure® 819 DW (Fa. Ciba, Lampertheim, DE), Esacure® KIP (Fa. Lamberti, Aldizzate, Italien). Es können auch Gemische dieser Verbindungen eingesetzt werden.

Soll die Härtung der polymerisierbaren Bestandteile zusätzlich thermisch initiiert werden, eignen sich als Initiatoren Peroxyverbindungen wie Diacylperoxide z.B. Benzoylperoxid, Alkylhydroperoxid wie Diisopropylbenzolmonohydroperoxid, Alkylperester wie tert.-Butylperbenzoat, Dialkylperoxide wie Di.-tertbutylperoxid, Peroxidicarbonate wie Dicetylperoxiddicarbonat, anorganische Peroxide wie Ammoniumperoxodisulfat, Kaliumperoxodisulfat oder auch Azoverbindungen wie 2,2'-Azobis[N-(2-propenyl)-2-methylpropionamide], 1-[(cyano-1-methylethyl)azo]-formamide, 2,2'-Azobis(N-butyl-2-methylpropionamide), 2,2'-Azobis(N-cyclohexyl-2-methylpropionamide), 2,2'-Azobis{2-methyl-N-[2-(1-hydroxybutyl)]propionamide}, 2,2'-Azobis{2-methyl-N-[2-(1-hydroxybutyl)]propionamide, 2,2'-Azobis{2-methyl-N-[1,1-bis(hydroxymethyl)-2-hydroxyethyl]propionamide, weiterhin auch Benzpinakol. Für wässrige Beschichtungssysteme bevorzugt werden Verbindungen, die wasserlöslich sind oder als wässrige Emulsionen vorliegen. Diese Radikalbildner können in bekannter Weise mit Beschleunigern kombiniert werden.

Weiterhin verwendbare Zusätze sind die bereits zuvor bei der Herstellung der erfindungsgemäßen Polyisocyanate beschriebene Stabilisatoren, Lichtschtzmittel wie UV-Absorber und sterisch gehinderte Amine (HALS), weiterhin Antioxidantien, Füllstoffe sowie Lackhilfsmittel, z.B. Antiabsetzmittel, Entschäumungs- und/oder Netzmittel, Verlaufmittel, Reaktivverdünner, Weichmacher, Katalysatoren, Hilfslösemittel und/oder Verdicker sowie Pigmente, Farbstoffe und/oder Mattierungsmittel. Der Einsatz von Lichtschutzmitteln und die verschiedenen Typen sind beispielhaft beschrieben in A. Valet, Lichtschutzmittel für Lacke, Vincentz Verlag, Hannover, 1996.

Die erfindungsgemäßen härtbaren Zusammensetzungen werden typischerweise derart hergestellt, dass die Bestandteile des Beschichtungsmittels in beliebiger Reihenfolge bei Temperaturen von -20 bis 120°C, bevorzugt 10 bis 90°C, insbesondere 20 bis 60°C miteinander vermischt werden. Dabei kann das Beschichtungsmittel bei Raumtemperatur fest, flüssig, gelöst oder dispergiert vorliegen. Feste Beschichtungsmittel werden mit den in der Pulverlacktechnik üblichen Geräten, insbesondere mit Extrudern, Mühlen und Sichtern hergestellt. Für flüssige, gelöste oder dispergierte Beschichtungsmittel eignen sich die dem Fachmann aus der Beschichtungstechnologie flüssiger Systeme bekannten Rührwerke und Dispergiereinrichtungen.

Bevorzugt beträgt in den erfindungsgemäßen Zusammensetzungen das Verhältnis von blockierten Isocyanatgruppen zu isocyanatreaktiven Gruppen in B3) 0,5 bis 2, bevorzugt 0,8 bis 1,5, besonders bevorzugt 1 zu 1.

Die erfindungsgemäßen Beschichtungsmittel lassen sich durch die üblichen Techniken auf unterschiedlichste Substrate applizieren, wie beispielsweise durch Spritzen, Walzen, Rakeln, Gießen, Sprühen, Streichen, Tränken oder Tauchen. Geeignete Substrate sind beispielsweise Holz, Metall, insbesondere auch Metall wie es in den Anwendungen der sogenannten Draht-, Coil-, Can- oder Container-Lackierung verwendet wird, weiterhin Kunststoff, insbesondere ABS, AMMA, ASA, CA, CAB, EP, UF, CF, MF, MPF, PF, PAN, PA, PE, HDPE, LDPE, LLDPE, UHMWPE, PET, PMMA, PP, PS, SB, PUR, PVC, RF, SAN, PBT, PPE, POM, PUR-RIM, SMC, BMC, PP-EPDM, und UP (Kurzbezeichnungen nach DIN 7728T1), Papier, Leder, Textilien, Filz, Glas, elektronische Baugruppen oder mineralische Untergründe. Es können auch Substrate, die aus verschiedenen der vorgenannten Materialien bestehen, oder bereits beschichtete Substrate lackiert werden. Es ist auch möglich die Beschichtungsmittel nur temporär auf ein Substrat aufzubringen, dann teilweise oder vollständig zu härten und wieder abzulösen, um z.B. Folien herzustellen.

Die applizierten Schichtdicken (vor der Härtung) liegen typischerweise zwischen 0,5 und 5000 µm, bevorzugt zwischen 5 und 1500 µm, besonders bevorzugt zwischen 15 und 1000 µm.

Die Strahlungshärtung erfolgt bevorzugt durch Einwirkung energiereicher Strahlung, also UV-Strahlung oder Tageslicht, z.B. Licht der Wellenlänge 200 bis 750 nm, oder durch Bestrahlen mit energiereichen Elektronen (Elektronenstrahlung, 150 bis 300 keV). Als Strahlungsquellen für Licht oder UV-Licht dienen beispielsweise Hochdruckquecksilberdampflampen, wobei der Quecksilberdampf durch Dotierung mit anderen Elementen wie Gallium oder Eisen modifiziert sein kann. Laser, gepulste Lampen (unter der Bezeichnung UV-Blitzlichtstrahler bekannt), Halogenlampen oder Eximerstrahler sind ebenfalls möglich. Die Strahler können ortsunbeweglich installiert sein, so dass das zu bestrahlende Gut mittels einer mechanischen Vorrichtung an der Strahlungsquelle vorbeibewegt wird oder die Strahler können beweglich sein und das zu bestrahlende Gut verändert bei der Härtung seinen Ort nicht. Die üblicherweise zur Vernetzung ausreichende Strahlungsdosis bei UV-Härtung liegt im Bereich von 80 bis 5000 mJ/cm².

Die Bestrahlung kann gegebenenfalls auch unter Ausschluss von Sauerstoff, z.B. unter InertgasAtmosphäre oder Sauerstoff-reduzierter Atmosphäre durchgeführt werden. Als Inertgase eignen sich bevorzugt Stickstoff, Kohlendioxid, Edelgase oder Verbrennungsgase. Des weiteren kann die Bestrahlung erfolgen, indem die Beschichtung mit für die Strahlung transparenten Medien abgedeckt wird. Beispiele hierfür sind z.B. Kunststofffolien, Glas oder Flüssigkeiten wie Wasser.

Je nach Strahlungsdosis und Aushärtungsbedingungen sind Typ und Konzentration des gegebenenfalls verwendeten Initiators in dem Fachmann bekannter Weise zu variieren.

Besonders bevorzugt werden zur Härtung Quecksilberhochdruckstrahler in ortsfesten Anlagen eingesetzt. Fotoinitiatoren werden dann in Konzentrationen von 0,1 bis 10, besonders bevorzugt 0,2 bis 3,0 Gew.-% bezogen auf den Festkörper der Beschichtung eingesetzt. Zur Härtung dieser Beschichtungen wird bevorzugt eine Dosis von 200 bis 3000 mJ/cm² gemessen im Wellenlängebereich von 200 bis 600 nm verwendet.

Das erfindungsgemäße Beschichtungsmittel härtet weiterhin durch Einwirkung von thermischer Energie. Die thermische Energie kann dabei durch Strahlung, Wärmeleitung und/oder Konvektion in die Beschichtung eingebracht werden, wobei üblicherweise die in der Beschichtungstechnologie gebräuchlichen Infrarot-Strahler, Nahinfrarotstrahler und/oder Öfen zum Einsatz kommen. Durch die Zuführung thermischer Energie wird die Vernetzungsreaktion der blockierten Isocyanatgruppen mit den Isocyanat-reaktiven Gruppen des Beschichtungsmittels ausgelöst.

Da durch die Einwirkung aktinischer Strahlung und die Erzeugung thermischer Energie zwei unabhängige chemische Mechanismen in Gang gesetzt werden, kann die Reihenfolge aktinische Strahlung/thermische Energie und damit die Reihenfolge, in der die Mechanismen ablaufen, beliebig kombiniert werden. Bevorzugt wird zunächst gegebenenfalls vorhandenes organisches Lösungsmittel und/oder Wasser mit den in der Beschichtungstechnologie üblichen Methoden entfernt. In einer bevorzugten Variante wird anschließend zunächst durch Einwirkung aktinischer Strahlung ganz oder teilweise gehärtet. Unmittelbar danach oder auch später sowie an der räumlich gleichen oder getrennter Stelle kann die thermische Härtung erfolgen. Es ist so zum Beispiel möglich zunächst flexible Beschichtungen zu erzeugen, die eine Verformung des Substrats schadlos überstehen und diese anschließend thermisch weiter zu härten. Es ist so zum Beispiel möglich, ggf. bereits beschichtetes Metall in Form sogenannter Coils zu beschichten und die Beschichtungen zunächst durch Einwirkung von aktinischer Strahlung zu einer flexiblen Beschichtung zu härten. Aus den beschichteten Coils können dann bestimmte Teile durch dem Fachmann bekannte Verfahren wie z.B. Stanzen herausgelöst und mechanisch in eine neue Form gebracht werden, ohne dass die Beschichtung Schaden nimmt und z.B. reißt. Anschließend wird durch thermische Energie die Vernetzungsreaktion der blockierten Isocyanatgruppen mit den Isocyanat-reaktiven Gruppen des Beschichtungsmittels ausgelöst, so dass sehr beständige Beschichtungen entstehen, die sich beispielsweise auch als Klarlacke für Automobilkarosserien oder für im Automobilbau verwendete Teile eignen.

In einer weiteren Variante wird zunächst eine Kunststofffolie beschichtet und die Beschichtung durch aktinische Strahlung zu einer blockfesten, aber elastischen Schicht gehärtet. Diese Folie kann später über ein Formteil gezogen und damit verklebt werden. Dieses sogenannte Tiefziehen erfolgt bevorzugt bei erhöhten Temperaturen, wobei während des Ziehvorgangs, an dessen Ende und/oder nach dem Ziehvorgang diejenige Temperatur erreicht wird, die zur Vernetzung der blockierten Isocyanatgruppen mit den Isocyanat-reaktiven Gruppen des Beschichtungsmittels notwendig ist, so dass die Beschichtung zu einer hochbeständigen Schicht vernetzt.

In einer weiteren Variante ist es auch möglich, zunächst durch thermische Energie zu vernetzen und anschließend die Oberflächen des so entstandenen beschichteten Substrats oder des nur aus dem erfindungsgemäßen Beschichtungsmittel bestehenden Teils durch Einwirken von aktinischer Strahlung bei Temperaturen von 0 bis 300°C, bevorzugt 23 bis 200°C, insbesondere von 80 bis 150°C weiter zu vernetzen. Insbesondere kann es vorteilhaft sein, das dem Fachmann als In-Mould-Coating bekannte Verfahren der thermischen Härtung von Beschichtungen mit einer nachträglichen Vernetzung durch aktinische Strahlung außerhalb der Form zu kombinieren.

### Beispiele:

Alle Prozentangaben sind, soweit nicht anders vermerkt, als Gewichtsprozent (Gew.-%) zu verstehen.
Der Gehalt freier NCO-Gruppen wurde durch Titration gemäß DIN EN ISO 11909 (Titration mit Dibutylamin) bestimmt.
Die Viskositäten wurden bei 23°C mit einem Rotationsviskosimeter (ViscoTester® 550 sowie Haake PK 100, Thermo Haake GmbH, D-76227 Karlsruhe) bestimmt.
Es wurde auf einem IR-Messgerät vom Typ Paragon 1000 FT-IR der Firma Perkin Elmer gemessen. Es wurde zwischen handelsüblichen NaCl Platten gemessen. Die zu messenden Substanzen wurden nicht weiter verdünnt.
**Desmodur**^{**®**} **N3300:** HDI-Polyisocyanat mit Isocyanuratstruktur, NCO-Gehalt 21,8 %, Viskosität 3000 mPas/23°C, Bayer AG, Leverkusen, DE
**Desmophen**^{**®**} **A 870:** Polyacrylat-Polyol, OH-Gehalt ca. 2,95% bzg. auf Lieferform, 70% ig in Butylacetat, Bayer AG, Leverkusen, DE
**Desmophen**^{**®**} **VP LS 2089:** Polyester-Polyol, OH-Gehalt: ca. 6% bzg. auf Lieferform, 75 %ig in Butylacetat, Bayer AG, Leverkusen, DE
Tinuvin 292: Lichtstabilisator für Lacke, Ciba AG, Basel, CH
Tinuvin 400: Lichtstabilisator für Lacke, Ciba AG , Basel, CH
BYK 306: Silikon-Oberflächenadditiv, BYK-Chemie GmbH, Wesel, DE
**Irgacure 184/Luc. TPO:** Photoinitiator von Ciba (Basel, CH), Lucirin TPO - Photoinitiator von BASF (Ludwigshafen, DE).

### Beispiel 1: DMP-blockiertes, acrylatgruppenhaltiges Polyisocyanat

In einem 1000 ml Vierhalskolben mit Rückflusskühler und Innenthermometer wurden 366,7 g (1,9 val) Desmodur® N3300 (NCO-Gehalt 21,8 %, Äquivalentgewicht 192,7 g) sowie 162,4 g Butylacetat (Festkörperanteil des fertigen Produktes 80%) vorgelegt. Als Stabilisatoren erhielt das Gemisch 0,36 g 2,6-Di-tert.butyl-4-methylphenol (Ionol). Das Gemisch wurde homogen verrührt und auf eine Temperatur von 60°C gebracht. Bei dieser Temperatur wurden 113,2 g (1,18 val) 3,5-Dimethylpyrazol hinzugegeben und gerührt, bis der NCO-Wert den theoretischen Wert erreichte.

Dann wurden 0,0064 g Zinn-Octoat hinzugegeben. Weiterhin wurden innerhalb von 15 Minuten 169,7 g (0,72 val) eines Adduktes von Glycidylmethacrylat und Acrylsäure (1:1) der Hydroxylzahl 235 mg KOH/g hinzugefügt. Das Gemisch hielt man bei einer Temperatur von 60°C so lange, bis der NCO-Wert der Reaktion Null erreichte. Die Kontrolle erfolgte per IR-Spektroskopie, nachweisbar durch Abnahme der Bande bei 2260 cm⁻¹ (Bande für Isocyanatgruppen) im IR-Spektrum. Die Farbzahl des Produktes betrug ca. 53 Apha, die Viskosität bei 23°C 4470 mPas. Der blockierte NCO-Wert betrug 6,09 %, das Equivalentgewicht 689,7 g/val blockiertes Isocyanat.

### Beispiel 2: erfindungsgemäßes blockiertes, acrylatgruppenhaltiges Polyisocyanat

In einem 1000 ml Vierhalskolben mit Rückflusskühler und Innenthermometer wurden in einer Stickstoffatmosphäre 366,7 g (1,90 val) Desmodur® N3300 (NCO-Gehalt 21,8%, Äquivalentgewicht 192,7 g) sowie 182,2 g Butylacetat vorgelegt (Festkörperanteil des fertigen Produktes 80%). Als Stabilisatoren erhielt das Gemisch jeweils 0,373g Jonol und Triphenylphosphin. Das Gemisch wurde homogen verrührt und innerhalb von 60 Minuten tropfte man 192,4 g (1,18 val) N-tert. Butyl-N-benzylamin (Äquivalentgewicht 163,3 g) hinzu. Die Reaktionstemperatur wurde dabei durch Wasserbadkühlung auf unter 45°C gehalten. Nach Ende der Aminzugabe wurde das Gemisch 15 min bei 45°C weitergerührt, bis der theoretische NCO-Wert erreicht war. Die N-tert. Butyl-N-benzylamin blockierten Stufe versetzte man mit 50 ppm DBTL und tropfte innerhalb von 15 Minuten 169,7 g (0,72 val) eines Adduktes von Glycidylmethacrylat und Acrylsäure (1:1) der Hydroxylzahl 235 mg KOH/g zu. Das Gemisch erhitzte man auf 60°C und hielt es bei dieser Temperatur so lange, bis der NCO-Wert der Reaktion Null erreichte. Die Kontrolle erfolgte per IR-Spektroskopie, nachweisbar durch Abnahme der Bande bei 2260 cm⁻¹ (Bande für Isocyanatgruppen) im IR-Spektrum. Die Farbzahl des Produktes betrug 17 Apha, die Viskosität bei 23°C 7780 mPas. Der blockierte NCO-Wert betrug 5,43 %, das Equivalentgewicht bezogen auf blockiertes Isocyanat betrug 773,5 g.

### Anwendungsbeispiele:

Zur Ermittlung der anwendungstechnischen Daten wurden jeweils ausgehend von den in Beispiel 1 und Beispiel 2 hergestellten Polyisocyanaten Lackfilme hergestellt und unter variierten Bedingungen ausgehärtet. Die Zusammensetzung der Beschichtungsmittel ist nach nachfolgender Tabelle zu entnehmen:

| **Komponente A** | **Äq.Zahl** | **2** | **1** |
|---|---|---|---|
| Desmophen® A 870 | 576 | 58,6 | 63,4 |
| Desmophen® VP LS 2089 | 283 | 54,7 | 59,2 |
| Tinuvin 292, Lff. | | 2,6 | 2,6 |
| Tinuvin 400,50% BA | | 5,3 | 5,3 |
| BYK 306, Lff. | | 1,3 | 1,3 |
| Irgacure 184/Luc. TPO, 50% in BA | | 7,9 | 7,9 |
| Butylacetat | | 141,5 | 140,1 |
| Zw.-Summe: | | 272,0 | 279,9 |

| **Komponente B** | Äq.Zahl | **2** | **1** |
|---|---|---|---|
| Polyisocyanat aus Beispiel 2 | 774 | 228,0 | |
| Polyisocyanat aus Beispiel 1 | 690 | | 220,1 |
| Summe: | | 500,0 | 500,0 |
| Feststoffgehalt | | 55% | 55% |

### Herstellung von Lackschichten auf Glas, Coil-Coat Blech sowie Blech für den Gradientenofen

Zur Überprüfung der allgemeinen Lacktechnischen Eigenschaften wurden die Beschichtungsmittel 1 und 2 mit einem knochenförmigen 100 µm Handrakel auf Glasplatten aufgetragen.

Zur Überprüfung der lacktechnischen Eigenschaften wie Ausgangsvergilbung, Überbrennvergilbung und Vergilbungszunahme wurden die Beschichtungsmittel 1 und 2 mit einem knochenförmigen 100 µm Handrakel auf sog. Coilcoatblech (beschichtet mit Basislack "Polarweiss", Lösemittel-basiert) aufgetragen.

Zur Prüfung der Beständigkeit gegen Baumharz, Bremsflüssigkeit Hydraulan 400, Pankreatin u.a., Natronlauge (NaOH) sowie Schwefelsäure (H₂SO₄) wurde das fertige Beschichtungsmittel auf Stahlblechen (420 mm x 98 mm), die speziell für die Benutzung auf dem Gradientenofen hergestellt werden, aufgetragen (siehe auch Probenvorbereitung für Untersuchungen im Gradientenofen.

Die Ergebnisse der gesamten lacktechnischen Untersuchungen finden sich in der nachfolgenden Tabelle.

Alle Beschichtungen wurden bei 50 °C im Trockenschrank 15 min von Lösemittel befreit. Als UV-Strahler wurde ein Gerät der Firma IST Strahlentechnik, Nürtingen, DE verwendet, die Bestrahlung erfolgt bei 1500 mJ/cm² (CK-Strahler, 80 W/cm). Nach abgeschlossener UV Bestrahlung bzw. thermischer Härtung wurde jeweils nach 60 Minuten bei Raumtemperatur die Pendelhärte nach König bestimmt.

Nach Applikation wurde die fertigen Lackmischungen wurde für 10 min bei 80°C abgelüftet, daraufhin erfolgten in unterschiedlicher Abfolge jeweils zwei der nachfolgend beschriebenen Aushärteverfahren:
a) UV Bestrahlung (CK 1500mJ/cm²) + 17 min 120°C thermische Aushärtung
b) UV Bestrahlung + 17min 140°C thermische Aushärtung
c) 17 min 120°C thermische Aushärtung + UV Bestrahlung
d) 17 min 140°C thermische Aushärtung + UV

Die Ergebnisse der lacktechnischen Prüfung sind untenstehend aufgeführt:

| **Beispiel** | **1a** | **1b** | **1c** | **1d** | **2a** | **2b** | **2c** | **2d** |
|---|---|---|---|---|---|---|---|---|
| Härtung | a) | b) | c) | d) | a) | b) | c) | d) |
| Auslaufzeit nach DIN 4 | 22s | 22s | 22s | 22s | 21s | 21s | 21s | 21s |
| GLAS: Filmoptik | Klar | Klar | Klar | Klar | Klar | Klar | Klar | Stippen |
| Pendelhärte, sec. | 153s | 200s | 201s | 205s | 123s | 182s | 175s | 192s |
| FAM^{[1]} | 0/0 | 0/0 | 0/0 | 0/0 | 0/0 | 0/0 | 0/0 | 0/0 |
| Ausgangsvergilbung^{[2]} | 1,7/2,1 | 1,9/2,3 | 1,4/1,5 | 1,2/1,6 | 2,7/2,8 | 4,6/4,9 | 1,5/1,8 | 1,4/1,9 |
| Überbrennvergilbung^{[3]} | 2,6/3,5 | 3,3/4,4 | 3,7/4,5 | 4,4/6,2 | 4,6/4,9 | 6,3/6,9 | 4,6/4,9 | 4,7/6,3 |
| Vergilbungszunahme^{[4]} | 0,9/1,4 | 1,4/2,1 | 2,3/3,0 | 3,2/4,6 | 1,9/2,1 | 1,7/2,0 | 3,1/3,1 | 3,3/4,4 |
| Kratzfestigkeit^{[5]} | 91/43 | 91/57 | 91 / 59 | 90/62 | 92/54 | 92/56 | 91 / 59 | 90 / 58 |
| Glanz Reflow 2h 60°C ^{[6]} | 57 | 73 | 72 | 74 | 60 | 64 | 68 | 68 |
| Delta Glanz / Reflow ^{[7]} | 48 / 34 | 34 / 18 | 32 / 19 | 28 / 16 | 38 / 32 | 36 / 28 | 32 / 23 | 32 / 22 |
| Rel. Restglanz/ Reflow % ^{[8]} | 47 / 63 | 63 / 80 | 65 / 79 | 69 / 82 | 59 / 65 | 61 / 70 | 65 / 75 | 64 / 76 |
| DB-Test(nach h) ^{[9]} | 1h | 1h | 1h | 1h | 1h | 1h | 1h | 1h |
| **Chemikalienbeständigkeit:** | | | | | | | | |
| Lösungsmittel^{[10]} | 0155 | 0004 | 0001 | 0001 | 0005 | 0001 | 0002 | 0001 |
| Baumharz^{[11]} | 56 | >68 | 58 | 68 | >68 | >68 | >68 | >68 |
| Pankreatin^{[12]} | 36 | 36 | 36 | 36 | 36 | 36 | 36 | 36 |
| NaOH, 1%ig^{[13]} | 36 | 36 | 36 | 36 | 36 | 36 | 36 | 36 |
| H₂SO₄, 1%ig^{[14]} | 36-39* | 36-43* | 36-38* | 36-43 | 36 | 36 | 36 | 36*-40 |
| DOI - vorher / nacher^{[15]} | 80 / 70 | 80 / 80 | 80 / 80 | 80 / 80 | 80 / 80 | 80 / 80 | 80 / 80 | 80 / 80 |
| Haze vorher / nacher ^{[16]} | 8 / 19 | 9 / 12 | 8 / 12 | 9 / 10 | 8 / 90 | 9 / 12 | 9 / 10 | 20 / 23 |
| Blasenbildung (Größe/Menge) | 5 / 1 | Keine | Keine | Keine | 5/2 | 2 / 1 | 1 / 1 | keine |

| | | | | | | | | |
|---|---|---|---|---|---|---|---|---|
| ^{[1]}: FAM (Fachausschuß Mineral- und Brennstoffnormung) ist ein von der Automobilindustrie geprägter Begriff für eine spezielle Benzin-Lösemittelkombination, die zur Prüfung der Beständigkeit von Karosserielacken verwendet wird. | | | | | | | | |

Als Prüfmittel wird in Anlehnung an DIN 51 604 (Teil 1) FAM-Prüfkraftstoff mit folgender Zusammensetzung verwendet:

| | |
|---|---|
| 50 Vol.-% | Xylol |
| 30 Vol.-% | Isooctan |
| 15 Vol.-% | Diisobutylen |
| 5 Vol.-% | Ethanol |

### Durchführung und Beurteilung:

Auf das Probeblech wurde ein für ca. 10 Sekunden in dem Prüfkraftstoff getränkter Wattebausch gelegt und sofort mit einem Uhrglas o.ä. abgedeckt. Nach 10 Minuten wurde der Wattebausch entfernt, die Fläche mit einem weichen Tuch abgewischt und beurteilt:
^{[2-4]}: Nach dem Einbrennen der Klarlacke wurde der Gelbwert b nach DIN 6174 (CIELAB) ermittelt. Anschließend wurde der Lack für 30 Minuten bei einer im Vergleich zur Einbrenntemperatur um 20 K höheren Temperatur überbrannt und ebenfalls der Gelbwert ermittelt. Die Differenz der beiden Gelbwerte (Delta b) ist ein Maß für die Thermovergilbungsstabilität der Lacke.
^{[2]} Ausgangsvergilbung, Delta b bei 30 und 50 µm.
^{[3]}: Überbrennvergilbung bei 30 min 140°C / 30 min 160°C - Delta b bei verschiedenen Schichtdicken
^{[4]}: Gesamt Delta b = Differenz zwischen beiden Delta -Werten
^{[5]}: Glanzangabe gemessen nach DIN EN ISO 2813 vor und nach der Verkratzung nach DIN 55668; Bürstenalter: 36 Betriebsstunden. Messung mittels Reflektometer; Das Prinzip des Reflektometers beruht auf der Messung der gerichteten Reflexion. Dazu wird die Intensität des reflektierten Lichts in einem schmalen Bereich des Reflexionswinkels gemessen.
^{[8]}: Der relative Restglanz in % gibt an, wie hoch der Glanzgrad [20° Einstrahlwinkel] nach Verkratzung gemäß DIN 55668 im Vgl. zum Glanzgrad vor Verkratzung ist (Messung quer zur Verkratzungsrichtung!). Je höher dieser Wert, desto besser ist die Kratzbeständigkeit.
^{[10]}: Lösemittelbeständigkeit: eingesetzte Lösemittel: X = Xylol, MPA = Methoxypropylacetat, EA = Essigsäureethylester, Ac = Aceton; Einwirkzeit 5 min, danach visuelle Beurteilung und Einstufung nach 1 für keine Veränderung und 5 für Ablösung des Lackfilmes
^{[11-16]}: Geprüft wurde die Beständigkeit gegen Baumharz, Bremsflüssigkeit, Pankreatin (Vogelexkremente), Natronlauge und Schwefelsäure sowie Benzin.

Um den realistischen Belastungen durch Sonneneinstrahlung zu entsprechen, wurden die Chemikalienbeständigkeiten (außer Benzin; siehe Pkt. 5) bei verschiedenen Temperaturen (36°C bis 68°C) untersucht. Hierzu stand ein Gradientenofen Typ 2601 der Firma BYK-Gardner zur Verfügung, der eine stufenlose Temperatureinstellung von 30°C bis 250°C ermöglicht.

### Probenvorbereitung für Untersuchungen im Gradientenofen

Die Prüfung erfolgte auf Stahlblechen (420 mm x 98 mm x 1 mm), die speziell für die Benutzung auf dem Gradientenofen hergestellt werden. Die Auftragung erfolgte wiederum mit einem Handrakel.
Lieferant: Franz Krüppel ― Industriebedarf, Postfach 13 04 36, Höffgeshofweg 17-19, 47807 Krefeld
Die Bleche wurden mit Xylol gut gesäubert.
Lackaufbau:
   - Füller, lösemittelhaltig oder wässrig
   - Basislack, lösemittelhaltig oder wässrig (bei Bedarf)
   - zu prüfender Klarlack

Die Prüfbleche werden mit Papierstreifen der Fa. BYK-Gardner versehen. Am unteren Rand kennzeichnet der Streifen die einzelnen Temperaturpunkte/Heizsegmente (Nummerierung von 1 bis 45). Der obere Papierstreifen ermöglicht eine übersichtliche Zuordnung von Temperatur und Messpunkt/Heizsegment.

### Durchführung

Die Prüfung wurde unter Normklima (23°C, 50 % rel. Feuchte) durchgeführt, weil ein Einfluss der Luftfeuchtigkeit auf die Prüfergebnisse nicht völlig ausgeschlossen werden kann.

Einstellung des Gradienten auf 35°C bis 80°C

Temperaturdifferenz: 1K pro Heizsegment

Konstanter Gradient ab 36°C beobachtbar

Die Prüfchemikalien werden von 36°C ausgehend nach folgendem Schema aufgetragen:

| **Chemikalie** | **Lösungsform** | **Größe des Prüffleckes** | **Temperatur-Intervall** | **Lieferant** |
|---|---|---|---|---|
| Baumharz | Lieferform | ∅ 5 mm | 2°C | DuPont |
| Bremsflüssigkeit Hydraulan 400 n.v. | Lieferform | ∅ 5 mm | 2°C | BASF AG |
| Pankreatin *) | 50 Gew.-% in vollentsalztem Wasser | ∅ 5 mm | 2°C | Fa. Merck |
| Natronlauge (NaOH) | 1 Gew.-% | ca. 25 µl | 1°C | |
| Schwefelsäure (H₂SO₄) | 1 Gew.-% | ca. 25 µl | 1°C | |

| | | | | |
|---|---|---|---|---|
| *) Die Pankreatin-Ursubstanz sollte gekühlt gelagert werden (<15°C lt. Hersteller). | | | | |

Die Pankreatin/Wasser-Mischung ist stets frisch anzusetzen; die Standzeit der Lösung sollte nicht mehr als 4 Stunden betragen.

Einen optimalen Auftrag der Substanzen erreicht man mit der Eppendorf-Multipette 4780 mit 25 µl-Spitze (Eppendorf-COMBITIPS, 1,25 ml) bzw. mit der Eppendorf-Multipette plus 4980 mit 25 µl-Spitze (Eppendorf-COMBITIPS plus, 2,5 ml).

Die Dauer zwischen Auftragsbeginn und Beginn der Belastung im Ofen sollte 10 Minuten nicht überschreiten.

Das präparierte Blech wird auf dem Gradientenofen 30 Minuten bei 36°C bis 68°C (Ofeneinstellung 35°C bis 80°C) thermisch belastet. Nach Ablauf dieser Zeit muss das Blech gereinigt werden, wobei zuerst Baumharz und Bremsflüssigkeit mit einem weichen Lappen und Waschbenzin gründlich, jedoch schonend entfernt werden. Die restlichen Chemikalien sind mit warmem Wasser abzuwaschen.

### Beurteilung

Die Beurteilung erfolgt nach 1 Stunde und nach 24 Stunden Lagerung bei Normklima (23°C, 50 % rel. Feuchte). Vor der optischen Beurteilung müssen evtl. ausgeschwitzte Agenzien mit einem Tuch entfernt werden.

Als Prüfergebnis wird für jede Chemikalie der Temperaturwert angegeben, bei dem (ohne Hilfsmittel) die erste sichtbare Schädigung auftritt.

Zusammenfassend kann gesagt werden, dass Decklacke mit den erfindungsgemäß blockierten Härtern (Lacke 2a bis 2d) im Vergleich zu Lacken mit DMP blockierten Härtern (Lacke 1a bis 1d) bessere Filmoptik, Kratzfestigkeit, Schwefelsäurebeständigkeit und Wasserbeständigkeit sowie eine wesentlich geringere Vergilbung nach UV- + thermischer Härtung zeigen.

## Patentansprüche

1. Blockierte Polyisocyanate, die neben wenigstens einer unter Einwirkung aktinischer Strahlung mit ethylenisch ungesättigten Verbindungen unter Polymerisation reagierenden Gruppe (strahlenhärtende Gruppe) auch wenigstens eine Struktureinheit der Formel (II) aufweisen, 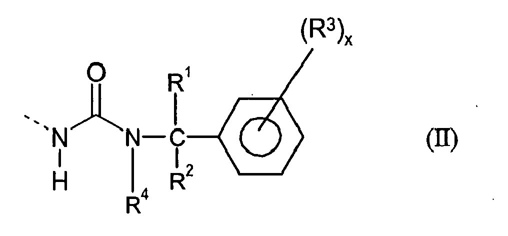 worin
R¹, R², R³ unabhängig voneinander Wasserstoff oder ein C₁-C₄-Alkyl- oder Cycloalkylrest sind,
R⁴ ein C₁-C₄-Alkyl, C₆-C₁₀-Cycloalkyl oder C₇-C₁₄-Aralkylrest ist und
x eine ganze Zahl von 1 - 5 ist.

2. Blockierte Polyisocyanate gemäß Anspruch 1, **dadurch gekennzeichnet, dass** die Struktureinheit der Formel (II) von N-tert. Butyl-N-benzylamin, N-Isopropyl-N-benzylamin, N-Ethyl-N-benzylamin, N-Methyl-N-benzylamin oder N-Isopropyl-N-(dimethyl)benzylamin abgeleitet ist.

3. Verfahren zur Herstellung der erfindungsgemäßen Polyisocyanate, bei dem
A1) ein oder mehrere organische Polyisocyanate mit
A2) einer oder mehreren Verbindungen, die mindestens eine isocyanatreaktive Gruppe aufweisen und mindestens eine unter Einwirkung aktinischer Strahlung mit ethylenisch ungesättigten Verbindungen unter Polymerisation reagierende Gruppe (strahlenhärtende Gruppe) enthalten,
A3) ggf. weiteren isocyanatreaktiven Verbindungen und
A4) Blockierungsmitteln gemäß Formel (I) 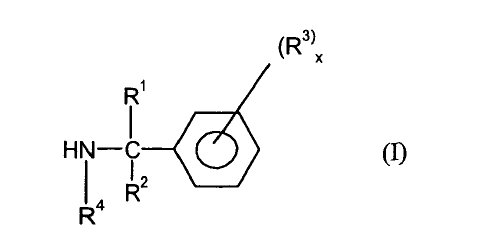 worin
R¹, R², R³ unabhängig voneinander Wasserstoff oder ein C₁-C₄-Alkyl- oder Cycloalkylrest sind,
R⁴ ein C₁-C₄-Alkyl, C₆-C₁₀-Cycloalkyl oder C₇-C₁₄-Aralkylrest ist und
x eine ganze Zahl von 1 bis 5 ist
umgesetzt werden.

4. Verfahren gemäß Anspruch 3, **dadurch gekennzeichnet, dass** in Komponente A1) Polyisocyanate oder Polyisocyanatgemische mit ausschließlich aliphatisch und/oder cycloaliphatisch gebundenen Isocyanatgruppen eingesetzt werden.

5. Verfahren gemäß Anspruch 3 oder 4, **dadurch gekennzeichnet, dass** in Komponente A4) N-tert. Butyl-N-benzylamin, das N-Isopropyl-N-benzylamin, N-Ethyl-N-benzylamin, N-Methyl-N-benzylamin und/oder N-Isopropyl-N-(dimethyl)benzylamin eingesetzt werden.

6. Verfahren gemäß einem der Ansprüche 3 bis 5, **dadurch gekennzeichnet, dass** pro Equivalent NCO in A1) 0,2 bis 0,8 Equivalente A4) und 0,2 bis 0,8 Equivalente A2) eingesetzt werden.

7. Beschichtungsmittel und Beschichtungen erhältlich unter Verwendung von blockierten Polyisocyanaten gemäß Anspruch 1 oder 2.
